# EUROPEAN PATENT APPLICATION

(11) **EP 1 209 802 A2**
(43) Date of publication of application: **29.05.2002**
(21) Application number: 01127887.6
(22) Date of filing: 23.11.2001
(51) Int. Cl.: H02K 9/10

(54) **Gasgekühlte Maschine, insbesondere Turbogenerator**

(30) Priority: 27.11.2000 DE 10058857
(71) Applicant: ABB Alstom Power N.V., 1101 CS Amsterdam (NL)
(72) Inventor: Baer, Jürgen, 5506 Mägenwil (CH); Eichin, Hermann, 79771 Klettgau (DE)
(74) Representative: Liebe, Rainer

(57) **Zusammenfassung**

Die Erfindung betrifft eine gasgekühlte Maschine (1), insbesondere einen Turbogenerator, umfassend eine Welle (6), auf der ein Axialventilator (9) angeordnet ist, eine Verschalung (11), die einen Zuströmraum (12) für ein vom Axialventilator (9) gefördertes Kühlgas von einem Abströmraum (13) für dieses Kühlgas trennt, und einen zylindrischen Kanalabschnitt (16), der koaxial zum Axialverdichter (9) angeordnet ist und den Axialverdichter (9) radial umgibt, wobei der Zuströmraum (12) eine asymmetrische Kühlgaszuführung aufweist und wobei im Zuströmraum (12) Mittel zur Vergleichmässigung der Kühlgaszuführung zum Axialventilator angeordnet sind.
Zur Verbesserung der Kühlung und somit des Wirkungsgrades der Maschine (1) bildet der Zuströmraum (12) im Bereich einer Einlauföffnung (17) des Kanalabschnitts (16) einen rotationssymmetrischen Ringraum (19). In diesem Ringraum (19) ist ein zylindrischer Ringkragen (20) koaxial zum Axialventilator (9) angeordnet. Der Ringkragen (20) ragt axial in den Ringraum (19) hinein und bildet an der Einlauföffnung (17) einen vollständig umlaufenden radialen Drosselspalt (21).

## Description

### Technisches Gebiet

Die Erfindung betrifft eine gasgekühlte Maschine, insbesondere eine elektrische Maschine, z.B. einen Turbogenerator, mit den Merkmalen des Oberbegriffs des Anspruches 1.

### Stand der Technik

Aus der EP 0 544 023 B1 ist eine gasgekühlte elektrische Maschine dieser Art bekannt, die eine rotierend antreibbare Welle aufweist, auf der ein Axialventilator angeordnet ist. Die bekannte Maschine besitzt ausserdem eine Verschalung, die einen Zuströmraum von einem Abströmraum trennt. Desweiteren ist an dieser Verschalung ein zylindrischer Kanalabschnitt ausgebildet, der koaxial zum Axialventilator angeordnet ist und diesen radial umgibt. Insbesondere bei gasgekühlten Turbogeneratoren wird die Kühlung durch Axialventilatoren gewährleistet, die normalerweise beidseits des Rotors des Turbogenerators auf dessen Welle befestigt sind und die erforderliche Kühlgasmenge und eine hinreichende Druckhöhe liefern. Bei solchen Turbogeneratoren sind Kühlgasführungen vor und hinter dem Axialventilator ausgebildet, die in Verbindung mit der vorgegebenen Drehrichtung des Rotors einen Einlaufdrall in Drehrichtung oder Gegendrehrichtung erzeugen. Die Einleitung des Kühlgases in den Zuströmraum und damit die Anströmung zum Axialventilator erfolgt bei Turbogeneratoren aufgrund der vorgegebenen Einbaubedingungen in der Regel nur von einer Seite, z. B. von unten, von den unter der Maschine angeordneten Kühlern. Durch diese einseitige, d.h. asymmetrische Kühlgaszuführung und durch die Drehrichtung des Axialventilators werden die Schaufeln des Axialventilators teilweise mit einem Mitdrall und teilweise mit einem Gegendrall beaufschlagt. Unter diesen Voraussetzungen kommt es im Abströmraum zu unterschiedlichen Luftgeschwindigkeiten, wodurch die Kühlwirkung ungleichmässig ist. Eine mangelhafte Kühlung verschlechtert jedoch die Ausnutzung der Maschine.

Bei der bekannten Maschine wird die Kühlung und somit die Ausnutzung der Maschine dadurch verbessert, dass stromauf des Axialventilators ein ringförmiges Gasführungsorgan angeordnet ist, das mit über seinen gesamten Umfang verteilten radial/axial verlaufenden Leitblechen versehen ist. Ausserdem ist auf einem Teil des Aussenumfangs des Gasführungsorgans eine Abdeckung angeordnet, die den Strömungsquerschnitt für das durch das Gasführungsorgan hindurch strömende Kühlgas in Hauptrichtung der Zuströmung drosselt. Durch die Leitbleche kann der Einlaufdrall reduziert werden, was sich positiv auf den Wirkungsgrad und somit auf eine gleichmässige Druckerzeugung des Axialventilators auswirkt. Die Herstellung und Anbringung eines derartigen Gasführungsorgans ist jedoch relativ aufwendig.

### Darstellung der Erfindung

Die vorliegende Erfindung beschäftigt sich mit dem Problem, für eine gasgekühlte Maschine der eingangs genannten Art eine andere Ausführungsform anzugeben, die ebenfalls eine verbesserte Kühlung und somit eine erhöhte Ausnutzung der Maschine ermöglicht und dabei relativ preiswert realisierbar ist.

Erfindungsgemäss wird dieses Problem durch die im Anspruch 1 gekennzeichneten Merkmale gelöst.

Die Erfindung beruht auf dem allgemeinen Gedanken, durch eine besondere Gestaltung des Zuströmraumes im Bereich einer Einlauföffnung des Kanalabschnitts unmittelbar an der Einlauföffnung einen radialen Drosselspalt auszubilden, der sich, insbesondere rotationssymmetrisch, entlang der gesamten Einlauföffnung erstreckt. Da die Drosselwirkung einer Drosselstelle von den herrschenden Druckverhältnissen abhängt, werden höhere Zuströmungsgeschwindigkeiten stärker gedrosselt als niedrigere Zuströmungsgeschwindigkeiten. Daher kommt es zu einer Vergleichmässigung der Druckverhältnisse und der Strömungsgeschwindigkeiten entlang des Drosselspaltes und somit entlang der Einlauföffnung. Insgesamt können somit die Schaufeln des Axialventilators gleichmässiger mit dem zuströmenden Kühlgas beaufschlagt werden, wodurch sich die Kühlwirkung innerhalb der Maschine und somit deren Ausnutzung verbessern lässt. Diese Umwandlung der asymmetrischen Kühlgaszuführung in den Zuströmraum in eine symmetrische Kühlgasanströmung des Axialventilators wird durch relativ einfache bauliche Eingriffe erreicht, so dass die Erfindung relativ preiswert realisierbar ist.

Bei einer besonderen Ausführungsform kann der in den Ringraum eingesetzte Ringkragen durch den Kanalabschnitt selbst oder durch einen Bereich des Kanalabschnitts gebildet sein. Bei dieser Konzeption sind somit keine zusätzlichen Bauteile erforderlich, die in die Maschine eingebaut werden müssen, um die erfindungsgemässe Maschine zu realisieren.

Vorzugsweise wird an der Einlauföffnung ein Einlauftrichter ausgebildet, dessen Krümmungsradius R kleiner ist als die radiale Länge HS der Schaufeln des Axialventilators. Als besonders vorteilhaft hat sich erwiesen, wenn das Verhältnis R zu HS grösser oder gleich 0,3 gewählt wird. Bevorzugt wird ein Verhältnis R zu HS, das in einem Bereich von etwa 0,3 bis etwa 0,4 liegt.

Des weiteren zeigen sich Vorteile, wenn eine axiale Länge b des Ringraumes, der zumindest im Bereich der Einlauföffnung im Zuströmraum ausgebildet ist, wenigstens doppelt so gross ist wie eine axiale Länge a des an der Einlauföffnung ausgebildeten Drosselspalts. Bevorzugt wird dabei ein Verhältnis von b zu a, das in einem Bereich von etwa 2,0 bis etwa 4,5 liegt.
Weitere Versuche haben ausserdem ergeben, dass es von Vorteil ist, die axiale Länge a des Drosselspalts kleiner zu wählen als die radiale Länge HS der Schaufeln des Axialventilators. Bevorzugt wird dabei ein Verhältnis von a zu HS, welches in einem Bereich von etwa 0,35 bis etwa 1,5 liegt.

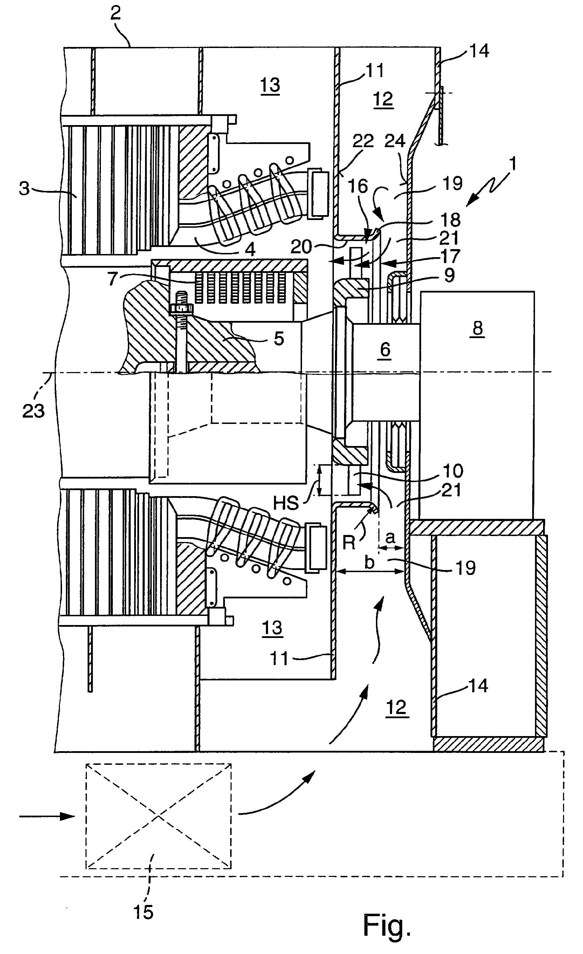

Weitere wichtige Merkmale und Vorteile der erfindungsgemässen Vorrichtung ergeben sich aus den Unteransprüchen, aus der Zeichnung und aus der zugehörigen Figurenbeschreibung anhand der Zeichnung.

### Kurze Beschreibung der Zeichnung

Ein bevorzugtes Ausführungsbeispiel der Erfindung ist in der Zeichnung dargestellt und wird in der nachfolgenden Beschreibung näher erläutert.

Die einzige Figur zeigt einen schematisierten Axialschnitt durch einen Teil einer erfindungsgemässen Maschine.

### Wege zur Ausführung der Erfindung

Entsprechend der einzigen Figur kann eine erfindungsgemässe gasgekühlte elektrische Maschine 1 vorzugsweise durch einen Turbogenerator gebildet sein, von dem lediglich eine Endpartie dargestellt ist. In einem Gehäuse 2 ist ein Stator 3 des Turbogenerators 1 angeordnet, der in herkömmlicher Weise mit Statorwicklungen 4 ausgestattet ist. Ein Rotor 5 des Turbogenerators 1 besitzt eine Welle 6, auf der ebenfalls in herkömmlicher Weise eine Rotorwicklung 7 angebracht ist. Die Welle 6 ist an ihren Enden jeweils in einem Lager 8 gelagert. Auf dieser Welle 6 ist ein Axialventilator 9 drehfest angebracht, der axiale Schaufeln 10 aufweist. Die radiale Länge der Schaufeln 10 des Axialventilators 9, d.h. die Schaufelhöhe ist hierbei mit HS bezeichnet. Eine Verschalung 11, die insbesondere mehrteilig ausgebildet sein kann, trennt einen Zuströmraum 12 des Axialventilators 9 von einem Abströmraum 13. Der Zuströmraum 12 ist nach aussen durch eine entsprechende Aussenverschalung 14 abgeschlossen, die ebenfalls mehrteilig ausgebildet sein kann.

An der Verschalung 11 ist ein zylindrischer Kanalabschnitt 16 ausgebildet, der koaxial zum Axialventilator 9 angeordnet ist und diesen radial umgibt. Dieser Kanalabschnitt 16 besitzt eine Einlauföffnung 17, die in den Zuströmraum 12 mündet. Ein der Einlauföffnung 17 zugeordneter Endabschnitt des Kanalabschnitts 16 ist als Einlauftrichter 18 ausgebildet, dessen Einlaufkrümmung einen Krümmungsradius R besitzt. Eine solche Konfiguration, bestehend aus dem zylindrischen Kanalabschnitt 16 und dem Einlauftrichter 18, wird als ein Ringkragen 20 bezeichnet.

Ebenso ist jedoch auch eine Ausführungsform möglich, bei der der Ringkragen 20 durch ein separates, vom Kanalabschnitt 16 unabhängiges Bauteil gebildet ist.

Bei der in der Figur wiedergegebenen Ausführungsform steht der Ringkragen 20 von einem ersten Wandabschnitt 22 ab, der in einer quer zur Längsachse 23 der Welle 6 verlaufenden Ebene liegt, und erstreckt sich in Richtung auf einen gegenüberliegenden zweiten Wandabschnitt 24, der ebenfalls in einer quer zur Längsachse 23 verlaufenden Ebene liegt. Zwischen dem axial freien Stirnende des Ringkragens 20 und dem zweiten Wandabschnitt 24 ist ein Drosselspalt 21 ausgebildet. Dementsprechend ragt der Ringkragen 20 bei der hier gezeigten Ausführungsform in einer vom Axialventilator 9 weggerichteten Richtung in einen Ringraum 19 hinein. Im Unterschied dazu kann bei einer anderen Ausführungsform der Ringkragen 20 auch vom zweiten Wandabschnitt 24 ausgehen und sich in Richtung des ersten Wandabschnitts 22 erstrecken, wobei dann in entsprechender Weise der Drosselspalt 21 zwischen dem axial freien Stirnende des Ringkragens 20 und dem ersten Wandabschnitt 22 mit den notwendigen Radien ausgebildet ist. Bei der letztgenannten Ausführungsform bilden Ringkragen 20 und Kanalabschnitt 16 voneinander unabhängige Bauteile.

Die vom Axialventilator 9 aus dem Zuströmraum 12 geförderte, um 90° umgelenkte Kühlluft strömt in Pfeilrichtung in den Abströmraum 13, verteilt sich dort in verschiedene Teilströme zur Kühlung von Rotor 5 und Stator 3. In einem nicht dargestellten mittleren Abschnitt der Maschine 1 tritt die nunmehr erwärmte Luft in unter der Maschine 1 angeordnete Kühler 15 ein, wird dort abgekühlt und gelangt hinter den Kühlern 15 zurück zum Zuströmraum 12.

Es ist klar, dass bei einer derartigen Maschine 1 grundsätzlich an beiden Seiten eine derartige Gaskühlung ausgebildet sein kann. Dementsprechend kann an beiden axialen Endabschnitten der Welle 6 jeweils ein derartiger Axialventilator 9 mit zugehörigem Zuströmraum 12 und Abströmraum 13 vorgesehen sein.

Auf Grund der gegebenen Einbaubedingung erfolgt die Anströmung bzw. Zuströmung innerhalb des Zuströmraumes 12 zum Axialventilator 9 im wesentlichen nur von einer Seite, nämlich von unten, her.

Damit die einseitige, d.h. asymmetrische Einleitung des Kühlgases in den Zuströmraum 12 und damit die Anströmung des Axialventilators 9 in Verbindung mit der vorgegebenen Drehrichtung der Welle 6 nicht zu einer ungleichmässigen Kühlung der Maschine 1 führt, ist zum einen der Zuströmraum 12 im Bereich des Kanalabschnitts 16 als rotationssymmetrischer Ringraum 19 ausgebildet, der relativ grosse Strömungsquerschnitte für die Zuströmung zum Axialventilator 9 gewährleistet. Zum anderen ist in diesem Ringraum 19 ein zylindrischer Ringkragen 20 koaxial zum Axialventilator 9 angeordnet. Bei der hier dargestellten bevorzugten Ausführungsform wird dieser Ringkragen 20 durch den Kanalabschnitt 16 bzw. durch einen axialen Bereich dieses Kanalabschnitts 16 gebildet. Der Kanalabschnitt 16 bzw. der Ringkragen 20 ist dabei so angeordnet, dass er axial in den Ringraum 19 hineinragt und an der Einlauföffnung 17 einen vollständig umlaufenden, rotationssymmetrischen radialen Drosselspalt 21 ausbildet. Während der Drosselspalt 21 eine axiale Länge a besitzt, weist der Ringraum 19 eine axiale Länge b auf.

Die Drosselwirkung des Drosselspaltes 21 hat zur Folge, dass Kühlluft, die in diesem Beispiel von unten, also mit einer relativ grossen Geschwindigkeit aus dem Zuströmraum 12 auf den Axialventilator 9 zuströmt, stärker gedrosselt wird als Kühlluft, die von einer anderen Stelle des Zuströmraums 12, beispielsweise von oben nach Umströmung des Ringkragens 20, also mit einer relativ kleinen Geschwindigkeit auf den Axialventilator 9 zuströmt. Aufgrund dieser Wirkung ergibt sich eine bessere Verteilung der aus dem Zuströmraum 12 zum Axialventilator 9 strömenden Kühlluft entlang des Drosselspalts 21. Gleichzeitig erhält dabei die Strömungsgeschwindigkeit der zugeführten Kühlluft im Zuströmraum 12 eine Vergleichmässigung am Umfang, wodurch sich entlang der Einlauföffnung 17 insgesamt ein gleichmässigerer Lufteintritt zum Axialventilator 9 ausbilden kann. Durch die gleichmässigere Beaufschlagung der Schaufeln 10 des Axialventilators 9 ergibt sich somit eine Verbesserung der Kühlwirkung für den Turbogenerator 1.

Des weiteren ist durch die Formgebung und Dimensionierung des Ringraumes 19 und durch die Anordnung des Ringkragens 20 eine Art Beruhigungszone ausgebildet, in der zusätzlich eine Beruhigung der aus dem Zuströmraum 12 ankommenden und zum Axialventilator 9 strömenden Kühlluft erfolgen kann. Durch den so ausgebildeten Ringraum 19 wird die Vergleichmässigung der Durchströmung des Drosselspaltes 21 zusätzlich unterstützt.

Untersuchungen haben gezeigt, dass sich die Kühlleistung und somit die Ausnutzung der Maschine 1 sowie insbesondere deren Wirkungsgrad im besonderen Masse erhöht werden können, wenn das Verhältnis b/a in einem Bereich zwischen etwa 2,0 und etwa 4,5 liegt und wenn das Verhältnis a/HS in einem Bereich zwischen etwa 0,35 und etwa 1,5 liegt, wobei gleichzeitig das Verhältnis R/HS in einem Bereich von etwa 0,3 bis etwa 0,4 liegt.

### Bezugszeichenliste

- 1: Maschine/Turbogenerator
- 2: Gehäuse
- 3: Stator
- 4: Statorwicklung
- 5: Rotor
- 6: Welle
- 7: Rotorwicklung
- 8: Lager
- 9: Axialventilator
- 10: Schaufel
- 11: Verschalung
- 12: Zuströmraum
- 13: Abströmraum
- 14: Aussenverschalung
- 15: Kühler
- 16: Kanalabschnitt
- 17: Einlauföffnung
- 18: Einlauftrichter
- 19: Ringraum
- 20: Ringkragen
- 21: Drosselspalt
- 22: erster Wandabschnitt
- 23: Längsachse
- 24: zweiter Wandabschnitt
- HS: radiale Länge von 10
- R: Krümmungsradius von 18
- a: axiale Länge von 21
- b: axiale Länge von 19

## Patentansprüche

1. Gasgekühlte Maschine, insbesondere Turbogenerator, mit einer rotierend antreibbaren Welle (6), auf der ein Axialventilator (9) angeordnet ist, mit einer Verschalung (11), die einen Zuströmraum (12) für ein vom Axialventilator (9) gefördertes Kühlgas von einem Abströmraum (13) für dieses Kühlgas trennt sowie mit einem zylindrischen Kanalabschnitt (16), der koaxial zum Axialventilator (9) angeordnet ist und diesen radial umgibt, wobei der Zuströmraum (12) eine asymmetrische Kühlgaszuführung aufweist und wobei im Zuströmraum (12) Mittel zur Vergleichmässigung der Kühlgaszuführung zum Axialventilator angeordnet sind, **dadurch gekennzeichnet,**
- **dass** der Zuströmraum (12) zumindest im Bereich einer Einlauföffnung (17) des Kanalabschnitts (16) einen rotationssymmetrischen Ringraum (19) bildet und
- **dass** im Ringraum (19) koaxial zum Axialventilator (9) ein zylindrischer Ringkragen (20) angeordnet ist, der axial in den Ringraum (19) hineinragt und an der Einlauföffnung (17) einen vollständigen umlaufenden radialen Drosselspalt (21) ausbildet.

2. Maschine nach Anspruch 1, **dadurch gekennzeichnet, dass** der Drosselspalt (21) rotationssymmetrisch ausgebildet ist.

3. Maschine nach Anspruch 1 oder 2, **dadurch gekennzeichnet, dass** der Ringkragen (20) in einer vom Axialventilator (9) weggerichteten Richtung in den Ringraum (19) hinein ragt.

4. Maschine nach einem der Ansprüche 1 bis 3, **dadurch gekennzeichnet, dass** der Ringkragen (20) an der Verschalung (11) ausgeformt ist.

5. Maschine nach einem der Ansprüche 1 bis 4, **dadurch gekennzeichnet, dass** der Kanalabschnitt (16) an der Verschalung (11) ausgeformt ist.

6. Maschine nach einem der Ansprüche 1 bis 5, **dadurch gekennzeichnet, dass** der Ringkragen (20) durch den Kanalabschnitt (16) oder durch einen Bereich des Kanalabschnitts (16) gebildet ist.

7. Maschine nach einem der Ansprüche 1 bis 6, **dadurch gekennzeichnet, dass** an der Einlauföffnung (17) ein Einlauftrichter (18) ausgebildet ist, dessen Krümmungsradius R kleiner ist als die radiale Länge HS der Schaufeln (10) des Axialventilators (9).

8. Maschine nach Anspruch 7, **dadurch gekennzeichnet, dass** das Verhältnis R/HS grösser oder gleich 0,3 ist.

9. Maschine nach Anspruch 7 oder 8, **dadurch gekennzeichnet, dass** das Verhältnis R/HS in einem Bereich von etwa 0,3 bis etwa 0,4 liegt.

10. Maschine nach einem der Ansprüche 2 bis 9, **dadurch gekennzeichnet, dass** der Ringraum (19) eine axiale Länge b aufweist und dass der Drosselspalt (21) eine axiale Länge a aufweist, wobei das Verhältnis b/a grösser oder gleich 2,0 ist.

11. Maschine nach einem der Ansprüche 2 bis 10, **dadurch gekennzeichnet, dass** der Ringraum (19) eine axiale Länge b aufweist und dass der Drosselspalt (21) eine axiale Länge a aufweist, wobei das Verhältnis b/a in einem Bereich von etwa 2,0 bis etwa 4,5 liegt.

12. Maschine nach einem der Ansprüche 2 bis 11, **dadurch gekennzeichnet, dass** der Drosselspalt (21) eine axiale Länge a aufweist, die kleiner ist als die radiale Länge HS der Schaufeln (10) des Axialventilators (9).

13. Maschine nach Anspruch 12, **dadurch gekennzeichnet, dass** das Verhältnis a/HS grösser oder gleich 0,35 ist,

14. Maschine nach Anspruch 12 oder 13, **dadurch gekennzeichnet, dass** das Verhältnis a/HS in einem Bereich von etwa 0,35 bis etwa 1,5 liegt.
